# DEMANDE DE BREVET EUROPEEN

(11) **EP 0 835 035 A1**
(43) Date de publication de la demande: **08.04.1998**
(21) Numéro de dépôt: 97402261.8
(22) Date de dépôt: 29.09.1997
(51) Int. Cl.: H04Q 11/00, H04J 3/06, H04J 14/08

(54) **Dispositif à retard variable pour signaux optiques**

(30) Priorité: 07.10.1996 FR 9612187
(71) Demandeur: ALCATEL ALSTHOM COMPAGNIE GENERALE D'ELECTRICITE, 75008 Paris (FR)
(72) Inventeur: Chiaroni, Dominique, 92160 Antony (FR); De Bouard, Dominique, 91700 Ste Genevieve des Bois (FR); Sotom, Michel, 75015 Paris (FR)
(74) Mandataire: Fournier, Michel

(57) **Abrégé**

Afin de réduire son temps de commutation, le dispositif à retard (Dx) comprend un coupleur (C) et un multiplexeur (M) comportant n entrées (B1-Bn) calées respectivement sur n longueurs d'onde (λ1-λn) distinctes. Des entrées (B2-Bn) du multiplexeur (M) sont couplées respectivement à des sorties (A2-An) du coupleur (C) par l'intermédiaire de dispositifs de conversion de longueur d'onde (K2, Ki, Kn) et de lignes à retard (L2, Li, Ln) toutes différentes. Chaque dispositif de conversion (Ki) possède une fonction de porte optique amplificatrice (G) et fournit à l'entrée correspondante (Bi) du multiplexeur (M) une onde portée par la longueur d'onde (λi) associée à cette entrée (Bi).

L'invention concerne également un dispositif de synchronisation de canaux d'un multiplex de longueurs d'onde utilisant le dispositif à retard variable.

Application notamment à la synchronisation de paquets optiques dans un réseau optique commuté.

## Description

L'invention se situe dans le domaine des transmissions d'informations utilisant des liaisons optiques et concerne plus particulièrement les dispositifs optiques à retard. Ces dispositifs sont employés notamment dans les réseaux "tout optique" commutés pour résoudre des problèmes de synchronisation de paquets, en vue de gérer les conflits dans les systèmes de commutation.

Un premier type de dispositif à retard connu consiste à placer en cascade alternativement des commutateurs optiques et des lignes à retard calibrées. Le chemin parcouru par une onde appliquée à l'entrée du dispositif est fonction des commandes appliquées aux commutateurs optiques. Cette solution présente toutefois l'inconvénient d'introduire du bruit interférométrique.

Un autre type de dispositif à retard consiste à placer en cascade un convertisseur de longueur d'onde accordable, un démultiplexeur optique et un multiplexeur optique, les sorties du démultiplexeur étant couplées aux entrées homologues du multiplexeur par l'intermédiaire de lignes à retard de longueurs toutes différentes. Ainsi, en fonction de sa longueur d'onde, l'onde fournie par le convertisseur est aiguillée vers une seule des lignes à retard.

Cette solution présente l'avantage de la simplicité mais elle est difficile à mettre en oeuvre si l'on souhaite obtenir des temps de commutation très courts. Par ailleurs, il convient de prévoir des moyens pour réaliser l'accord dynamique de la porteuse du convertisseur.

L'invention a pour but de remédier aux inconvénients précédents. Dans ce but, l'invention a pour objet un dispositif pour créer un retard variable entre une onde optique de sortie et une onde optique d'entrée modulées entre des niveaux bas et haut de puissance, caractérisé en ce qu'il comporte :
- un coupleur comprenant au moins une entrée pour recevoir l'onde optique d'entrée, et n sorties pour fournir des parties de ladite onde d'entrée,
- un multiplexeur comprenant au moins une sortie pour fournir l'onde optique de sortie, et n entrées calées respectivement sur n longueurs d'ondes différentes associées, lesdites entrées du multiplexeur étant couplées respectivement aux sorties du coupleur par l'intermédiaire de dispositifs de conversion de longueur d'onde associés et, pour au moins n-1 entrées du multiplexeur, respectivement par l'intermédiaire de lignes à retard toutes différentes,
et en ce que chaque dispositif de conversion a une fonction de porte optique amplificatrice pour fournir sélectivement une onde convertie modulée en fonction de ladite onde d'entrée et portée par une longueur d'onde égale à celle associée à ladite entrée.

Grâce à la présence de portes optiques amplificatrices, c'est-à-dire d'amplificateurs optiques généralement optimisés pour permettre une variation rapide de gain en fonction d'une commande électrique, la commutation peut être très rapide, typiquement inférieure à 300 picosecondes, contrairement aux solutions utilisant des convertisseurs de longueur d'onde accordables. En outre, les porteuses sont stables puisque chaque convertisseur émet avec une longueur d'onde fixe. Par ailleurs, les gains des amplificateurs peuvent être réglés, ce qui permet d'ajuster la puissance du signal de sortie et de le rendre indépendant du retard appliqué. Enfin, l'utilisation de portes optiques ayant un taux d'isolation élevé associées à un multiplexeur assure la séparation spectrale, ce qui évite la création de bruit interférométrique.

Selon un aspect de réalisation de l'invention, chaque dispositif de conversion de longueur d'onde comprend un amplificateur optique semi-conducteur couplé d'une part à l'une desdites sorties du coupleur et d'autre part à un oscillateur laser fournissant une onde de sonde, ledit amplificateur étant prévu pour fonctionner en régime de saturation lorsque l'onde optique d'entrée est à son niveau haut de puissance, ladite onde convertie modulée étant ladite onde de sonde amplifiée par ledit amplificateur.

Selon cette réalisation, l'amplificateur optique semi-conducteur joue à la fois le rôle de porte optique amplificatrice et de convertisseur de longueur d'onde.

L'invention a également pour objet un dispositif de synchronisation de canaux d'un multiplex de longueurs d'onde utilisant le dispositif à retard variable selon l'invention.

D'autres aspects et avantages de l'invention apparaîtront dans la suite de la description en référence aux figures.
- La figure 1 représente un dispositif à retard selon l'invention.
- La figure 2 représente un mode de réalisation préféré d'un dispositif de conversion de longueur d'onde ayant la fonction de porte optique amplificatrice.
- La figure 3 représente un dispositif de synchronisation de canaux d'un multiplex de longueurs d'onde utilisant le dispositif à retard selon l'invention.

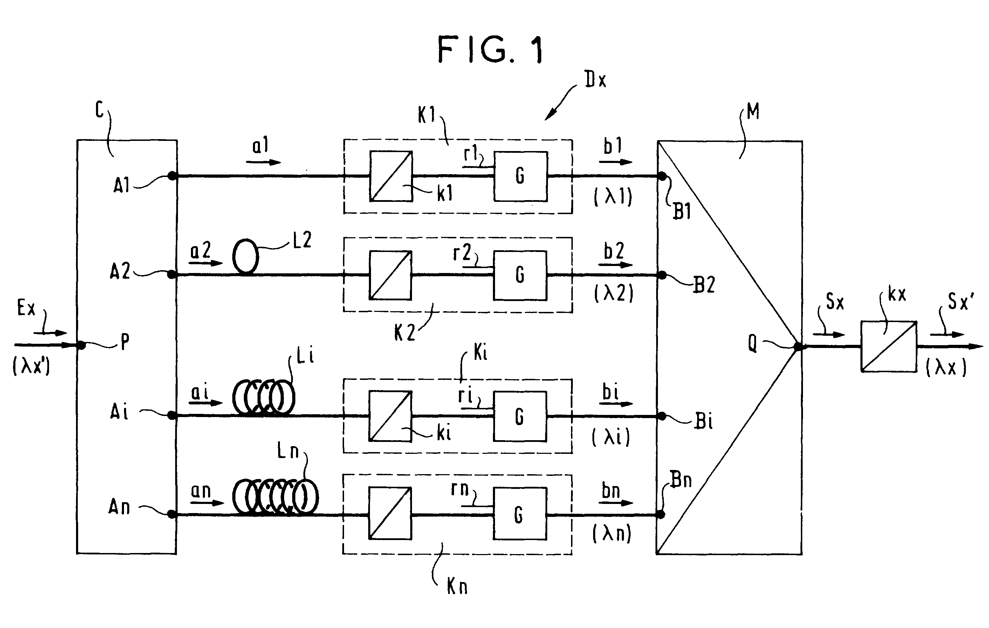

Le dispositif à retard variable Dx représenté à la figure 1 comporte un coupleur C muni d'une entrée P et de n sorties A1, A2, Ai, An. L'entrée P est prévue pour recevoir un signal optique d'entrée Ex. Ce signal a la forme d'une porteuse, de longueur d'onde λx', modulée en puissance. La première sortie A1 du coupleur C est reliée à une entrée B1 d'un multiplexeur M par l'intermédiaire d'un dispositif de conversion de longueur d'onde K1. Les autres sorties A2, Ai, An du coupleur sont reliées chacune à une entrée B2, Bi, Bn du multiplexeur M par l'intermédiaire d'une ligne à retard L2, Li, Ln et d'un dispositif de conversion de longueur d'onde K2, Ki, Kn. La sortie Q du multiplexeur M fournit le signal de sortie Sx qui a également la forme d'une porteuse modulée en puissance.

Si l'on souhaite disposer d'un signal de sortie de longueur d'onde déterminée λx, la sortie Q sera reliée à un convertisseur de longueur d'onde de sortie kx prévu pour fournir un signal de sortie converti Sx' portée par cette longueur d'onde λx.

Selon une première possibilité de réalisation, chaque dispositif de conversion, par exemple Ki, comporte un convertisseur de longueur d'onde ki couplé à une porte optique amplificatrice G commandable par un signal de commande ri. Chaque convertisseur ki reçoit une partie ai de l'onde d'entrée Ex par l'intermédiaire de la ligne à retard associée Li ou directement pour le convertisseur k1. Les portes optiques G reçoivent respectivement des convertisseurs k1, k2, ki, kn des ondes converties portées respectivement par les longueurs d'onde λ1, λ2, λi, λn. Ces longueurs d'onde sont celles sur lesquelles sont calées respectivement les entrées B1, B2, Bi, Bn du multiplexeur M.

En fonctionnement, des signaux de commande r1, r2, ri, rn sont appliqués sélectivement aux portes G des dispositifs de conversion de longueur d'onde K1, K2, Ki, Kn. Lorsqu'une onde modulée Ex est appliquée à l'entrée P du coupleur C, la ou les portes G actives fournissent aux entrées correspondantes du multiplexeur M des ondes retardées b1, b2, bi, bn, avec un retard fonction de la ligne à retard L2, Li, Ln associée. Le multiplexeur M fournit alors par sa sortie Q le signal de sortie Sx qui est alors composé de cette ou de ces ondes retardées.

Optionnellement, le convertisseur de sortie kx fournit à partir du signal Sx un signal de sortie converti Sx' porté par une longueur d'onde déterminée λx pouvant être égale ou différente de la longueur d'onde λx' portant le signal d'entrée Ex.

Les positions relatives des dispositifs de conversion et des lignes à retard sont en principe quelconques.

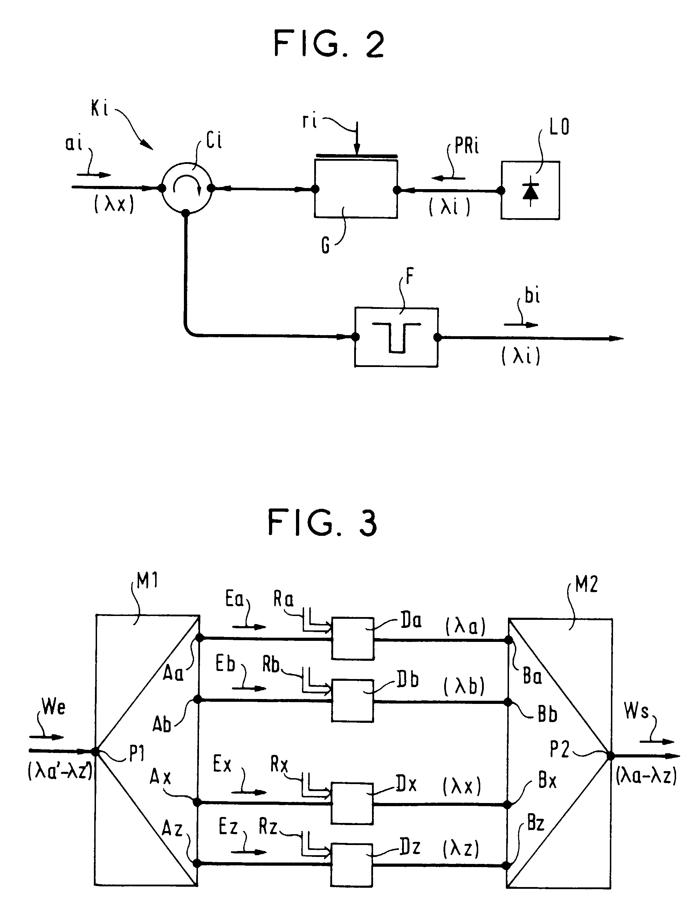

Les dispositifs de conversion de longueur d'onde qui viennent d'être décrits utilisent des convertisseurs de longueur d'onde et des portes amplificatrices séparées. Néanmoins, ces deux composants peuvent être avantageusement remplacés par le dispositif représenté à la figure 2.

Selon ce mode de réalisation, chaque dispositif de conversion Ki comporte un amplificateur optique semi-conducteur G dont une face reçoit une onde de pompe PRi fournie par un oscillateur laser Lo accordé pour fournir la longueur d'onde λi. La face opposée de l'amplificateur est reliée à un premier port d'un circulateur Ci à trois ports. Le circulateur est disposé de façon à aiguiller la partie d'onde ai reçu du coupleur C par son deuxième port vers l'amplificateur G et à aiguiller l'onde reçue de l'amplificateur G vers un troisième port. Dans le cas où la longueur d'onde λx de la partie d'onde ai est différente de la longueur d'onde λi fournie par le laser LO, ce troisième port pourra être couplé à un filtre réjecteur F calé sur la longueur d'onde λx. Le filtre F fournit alors en sortie l'onde retardée bi portée par la longueur d'onde λi.

L'amplificateur G est dimensionné de sorte que, lorsqu'il est alimenté en courant, il fonctionne en régime de saturation si la partie d'onde ai est à un niveau haut de puissance, c'est-à-dire lorsque le signal d'entrée Ex est à son niveau haut de puissance.

Selon la réalisation représentée, la partie d'onde ai et l'onde de sonde PRi injectée dans l'amplificateur ont des sens de propagation opposés. Selon une variante, on pourrait appliquer ces deux ondes de façon co-directionnelle. Néanmoins, la disposition représentée assure une meilleure élimination de la longueur d'onde λx de l'onde fournie bi.

Le dispositif à retard qui vient d'être décrit trouve une application intéressante pour réaliser un dispositif de synchronisation de canaux optiques constituant un multiplex de longueurs d'onde. Un tel dispositif de synchronisation est illustré à la figure 3.

Le dispositif comprend un démultiplexeur d'entrée M1 et un multiplexeur de sortie M2. Le démultiplexeur d'entrée M1 est muni d'un port d'entrée P1 et de plusieurs ports de sortie Aa, Ab, Ax, Az. Le multiplexeur de sortie M2 est muni d'un port de sortie P2 et de plusieurs ports d'entrée Ba, Bb, Bx, Bz. Le démultiplexeur M1 est prévu pour fournir par ses sorties Aa, Ab, Ax, Az les canaux Ea, Eb, Ex, Ez portés respectivement par les longueurs d'onde λa', λb', λx', λz' d'un multiplex d'entrée We reçu par le port d'entrée P1.

Les sorties Aa, Ab, Ax, Az du démultiplexeur Ml sont reliées respectivement aux entrées Ba, Bb, Bx, Bz du multiplexeur M2 par l'intermédiaire de dispositifs à retard variable Da, Db, Dx, Dz. Chacun de ces dispositifs à retard est réalisé conformément à l'invention, selon la variante qui comporte un convertisseur de sortie kx. Le multiplexeur M2 et les dispositifs à retard Da-Dz sont prévus pour que les longueurs d'onde λa, λb, λx, λz fournies respectivement par les dispositifs à retard Da, Db, Dx, Dz correspondent respectivement aux longueurs d'onde autorisées aux entrées Ba, Bb, Bx, Bz du multiplexeur M2.

En fonctionnement, les dispositifs à retard Da, Db, Dx, Dz reçoivent respectivement les commandes Ra, Rb, Rx, Rz qui définissent les retards à appliquer respectivement aux canaux Ea, Eb, Ex, Ez correspondants. Ainsi, les différents canaux Ea-Ex du multiplex d'entrée We peuvent être retardés chacun d'une valeur déterminée et le multiplexeur M2 fournira en sortie un multiplex de sortie Ws constitué de ces canaux sélectivement retardés.

Les canaux du multiplex de sortie Ws sont portés par les longueurs d'onde λa-λz imposées par le multiplexeur M2. Ces longueurs d'onde λa-λz peuvent être identiques ou différentes des longueurs d'onde λa'-λz' du multiplex d'entrée We.

## Revendications

1. Dispositif pour créer un retard variable entre une onde optique de sortie (Sx) et une onde optique d'entrée (Ex) modulées entre des niveaux bas et haut de puissance, caractérisé en ce qu'il comporte :
- un coupleur (C) comprenant au moins une entrée (P) pour recevoir l'onde optique d'entrée (Ex), et n sorties (A1-An) pour fournir des parties (a1-an) de ladite onde d'entrée (Ex),
- un multiplexeur (M) comprenant au moins une sortie (Q) pour fournir l'onde optique de sortie (Sx), et n entrées (B1-Bn) calées respectivement sur n longueurs d'ondes (λ1-λn) différentes associées, lesdites entrées (B1-Bn) du multiplexeur (M) étant couplées respectivement aux sorties (A1-An) du coupleur (C) par l'intermédiaire de dispositifs de conversion de longueur d'onde associés (K1-Kn) et, pour au moins n-1 entrées (B2-Bn) du multiplexeur (M), respectivement par l'intermédiaire de lignes à retard (L2-Ln) toutes différentes,
et en ce que chaque dispositif de conversion (Ki) a une fonction de porte optique amplificatrice (G) pour fournir sélectivement une onde convertie (bi) modulée en fonction de ladite onde d'entrée (Ex) et portée par une longueur d'onde (λi) égale à celle associée à ladite entrée (Bi).

2. Dispositif selon la revendication 1, caractérisé en ce que chaque dispositif de conversion de longueur d'onde (Ki) comprend un amplificateur optique semi-conducteur (G) couplé d'une part à l'une desdites sorties (Ai) du coupleur (C) et d'autre part à un oscillateur laser (LO) fournissant une onde de sonde (PRi), ledit amplificateur (G) étant prévu pour fonctionner en régime de saturation lorsque l'onde optique d'entrée (Ex) est à son niveaux haut de puissance, ladite onde convertie modulée (bi) étant ladite onde de sonde (PRi) amplifiée par ledit amplificateur (G).

3. Dispositif selon la revendication 2, caractérisé en ce que ladite onde de sonde (PRi) et la partie (ai) de l'onde d'entrée (Ex) injectées dans ledit amplificateur (G) ont des sens de propagation opposés.

4. Dispositif selon l'une des revendications 1 à 3, caractérisé en ce qu'il comprend un convertisseur de longueur d'onde de sortie (ks) relié à la sortie (Q) dudit multiplexeur (M).

5. Dispositif pour la synchronisation de canaux optiques formant un multiplex de longueurs d'onde (We), caractérisé en ce qu'il comprend :
- un démultiplexeur d'entrée (M1) comportant un port d'entrée (P1) apte à recevoir un multiplex d'entrée (We) formé de canaux (Ea-Ez) portés respectivement par des longueurs d'onde d'entrée (λa'-λz'), et plusieurs ports de sortie (Aa-Ax) aptes à fournir respectivement lesdits canaux (Ea-Ez) dudit multiplex d'entrée (We),
- un multiplexeur de sortie (M1) comportant des ports d'entrée (Ba-Bz) associés respectivement auxdits canaux (Ea-Ez) et calés respectivement sur des longueurs d'onde de sorties (λa-λz),
et en ce que chaque port de sortie (Ax) est couplé à un port d'entrée (Bx) par l'intermédiaire d'un dispositif à retard variable selon la revendication 4, et dont le convertisseur de longueur d'onde de sortie (ks) délivre la longueur d'onde qui est associée audit port d'entrée (Bx).
